# EUROPEAN PATENT APPLICATION

(11) **EP 4 851 554 A1**
(43) Date of publication of application: **09.12.2026**
(21) Application number: 26177392.3
(22) Date of filing: 08.05.2026
(51) Int. Cl.: F24S 25/40, H02S 20/24

(54) **SUPPORT, FOR SUPPORTING A CONSTRUCTION ON A SURFACE**

(30) Priority: 02.06.2025 NL 2040493
(71) Applicant: Tinteq Holding B.V., 3812 RZ Amersfoort (NL)
(72) Inventor: Beekmann, Jasper, Amersfoort (NL); Frima, Tim, Amersfoort (NL)
(74) Representative: IP Maison

(57) **Abstract**

Support, for supporting an underside such as a leg or support beam (4) of a construction, in particular a support construction for solar panels, on a surface, in particular a flat roof, the support comprising:
- A flat, flexible support body (1), such as a plate with an arbitrary contour shape, provided with:
- a number of attachment loops (2,3) for a projection (5,6) provided on the underside of the construction (4), such as a hook or flange,
∘ each of the attachment loops (2,3) formed by at least one cut (2A,2B,3A,3B) in the support body (1) that does not touch the circumference of the support body (1); and
each thereby comprising a first and second connection point (2C,2D,3C,3D) with the rest of the support body (1) located at a mutual distance, between which connection points (2C,2D,3C,3D) the loop (2,3) can be lifted out of the plane of the support body (1), in order to be hooked around the projection (5,6).

## Description

The present invention relates to a support for supporting a construction on a surface. More in particular, the invention relates to a support for supporting an underside such as a leg or support beam of a construction, in particular a support construction for solar panels, on a surface, in particular a flat roof.

Supports for solar panels on flat roofs are well known in the art. The constructions are often made of aluminum profiles, provided with end pieces, often made of plastics. The end pieces may be made of plastics as this is an easy way to manufacture them, by injection molding for instance, but also as it prevents damage to the flat roof material, often a bitumen product.

However, these end stops tend to slide, even with weights, such as tiles, over the roof services.

For that reason, an friction increasing element may be applied, such as a rubber support. This may be efficient once it is in place, as it prevents sliding, but the placement and positioning thereof is cumbersome and very time consuming, as those rubber supports must be placed exactly at the positions where the construction is expected to encounter the flat roof.

Additionally, prior art friction increasing elements may not be able to withstand forces in the direction of the plane of the support, such as the flat roof. Due to thermal expansion or gravity in case of a non-horizontal roof, the constructions may lose their friction increasing elements or they may be unintentionally displaced.

It is a goal of the present invention to provide a solution for the disadvantages of the prior art, and/or at least to provide a useful alternative thereto.

The invention thereto proposes a support, for supporting an underside such as a leg or support beam of a construction, in particular a support construction for solar panels, on a surface, in particular a flat roof, the support comprising:
- A flat, flexible support body, such as a plate with an arbitrary contour shape, provided with:
   - At least one and preferably a number of attachment loops for a projection provided on the underside of the construction, such as a hook or flange,
      ∘ each of the attachment loops formed by at least one cut in the support body that does not touch the circumference of the support body; and
      ∘ each thereby comprising a first and second connection point with the rest of the support body located at a mutual distance, between which connection points the loop can be lifted out of the plane of the support body, in order to be hooked around the projection.

By hooking the loops around the projections of the underside of the construction, the support can be adhered to the construction without further tooling. This can be done before the construction is positioned on the surface such as the flat roof, and therewith the support is automatically correctly positioned. However, it is also possible to position the construction on the support and adhering the loops afterwards. By providing multiple, that is: at least two, loops at opposite sides of the support, it may be fixed to the construction in such way that it can withstand movements in the plane of surface. Once positioned, this is normally the horizontal plane. This is an advantage over the prior art, as prior art constructions tend to lose their loosely positioned supports when the construction is repositioned.

As the loops must cross the flange edge in order to be fastened, they enclose and/or surround the construction and keep it in position that way, Depending on the number of loops and their positions, they may be able to prevent the construction from sliding in one or two dimensions.

As an extra precaustion, the side of the support that is intended to be facing the surface, may be provided with a profile, to increase friction.

A loop formed by a single cut extends along the edge of the support body. It may be desired to have a circumferential protection around the loop, or simply a larger friction surface.According to the invention, the at least one attachment loop may be formed by means of two cuts in the support body that do not touch the circumference of the support body, which cuts each extend from their own starting point to their own end point, wherein the loop is attached to the rest of the support body over a connecting line between the two starting points and over a connecting line over the two end points. This way, the loop falls completely within the area of the support. It is less fragile and the friction area of the support is larger.

The cuts belonging to or forming one specific loop may extend substantially parallel to each other. If so, the loop has the same width over its entire length, which leads to a homogenic distribution of its elasticity. This leads to a robust support.

Another advantage of the use of multiple parallel cuts is that the support device according to the invention may become universally applicable. Depending on the construction, different cuts / loops may actually be used to adhere the support to the construction.

The cuts of multiple attachment loops may also extend parallel to each other. This may in particular be the case where two parallel loops are formed, for instance with the intention of adhering to a construction at two opposite sided.

When rectangular or square constructions are to be supported, the cuts and thus the loops may extend substantially in an L-shape. These loops can then be coupled around the corners of the support.

A support according to the invention may comprise four loops, wherein each of the legs of an L-shape lies parallel to a leg of another L-shape, wherein the L-shapes together enclose a rectangle or square.

The support according to the invention may be manufactured from a rubber or synthetic rubber, or from a laminate comprising a rubber or synthetic rubber. The rubber or synthetic rubber may be a recycled rubber granulate from car tires bonded with polyurethane to form a mat. A laminate may comprise an aluminum triplex laminate of polypropylene-aluminum-PET. The use of a sacrificial strip of a plastic roof covering such as PVC, EPDM or TPO/FPO, possibly on a reinforcement of for instance aluminum is also thinkable. The sacrificial strip then serves to avoid chemical reactions between the support and the flat roof material. In addition, or as an alternative, a coating is possible. Additionally, glass fiber or polyester fabric reinforcements and/or isolation are thinkable.

In an embodiment, at least one loop on a side of the loop facing away from the outside of the support body comprises a projection directed towards the inside of the support body. Such projection serves to further secure the support to the construction. It may keep the loop in its lifted position and therewith increase friction and reduce the chance of losing the support.

In case only one loop is present, it may have such projection at a random side, or at both sides.

The invention also relates to an assembly of a support according to one of the preceding claims and a bottom side of a construction, such as a leg, provided with a flange, wherein the cuts of each of the loops located furthest from the outer edge of the support body are located together on a shape that corresponds to the circumferential shape of the flange on the leg. Herein, preferably, the projection extends within the circumferential shape.

The invention will now be elucidated in more detail with reference to the following figures:
- Figure 1 shows a first embodiment of a device according to the invention;
- Figure 2 shows a second embodiment of a device according to the invention; and
- Figure 3 shows a third embodiment of a device according to the invention.

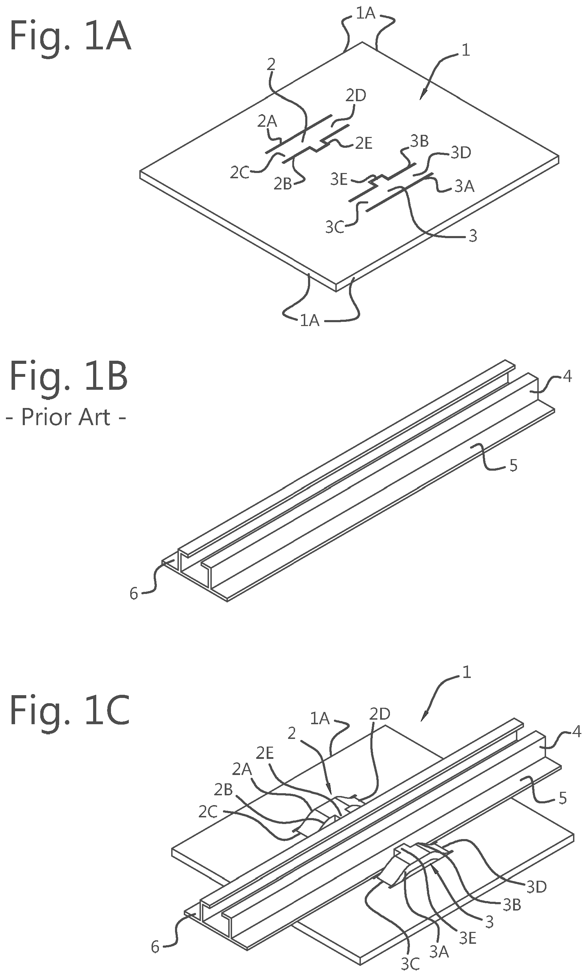

Figure 1A shows a first embodiment of a device 1 according to the invention. The device 1 is a support, for supporting an underside such as a leg or support beam (4, visible in figure 1B) of a construction, in particular a support construction for solar panels, on a surface, in particular a flat roof, the support 1 comprising a flat, flexible support body 1, such as a plate with an arbitrary contour shape, provided with: a number of attachment loops 2, 3 for a projection 5, 6 provided on the underside of the construction, such as a hook or flange 5, 6, each of the attachment loops 2, 3 formed by at least one cut 2A, 2B, 3A, 3B in the support body that does not touch the circumference 1A of the support body 1; and each thereby comprising a first 2C, 3C and second 2D, 3D connection point with the rest of the support body 1 located at a mutual distance, between which connection points the loop 2, 3 can be lifted out of the plane of the support body, in order to be hooked around the projection. Figure 1C shows an assembled state. The cuts extend substantially parallel to each other and the cuts of multiple attachment loops extend parallel to each other and on a side of the loop facing away from the outside of the support body comprises a projection 2E, 3E directed towards the inside of the support body 1.

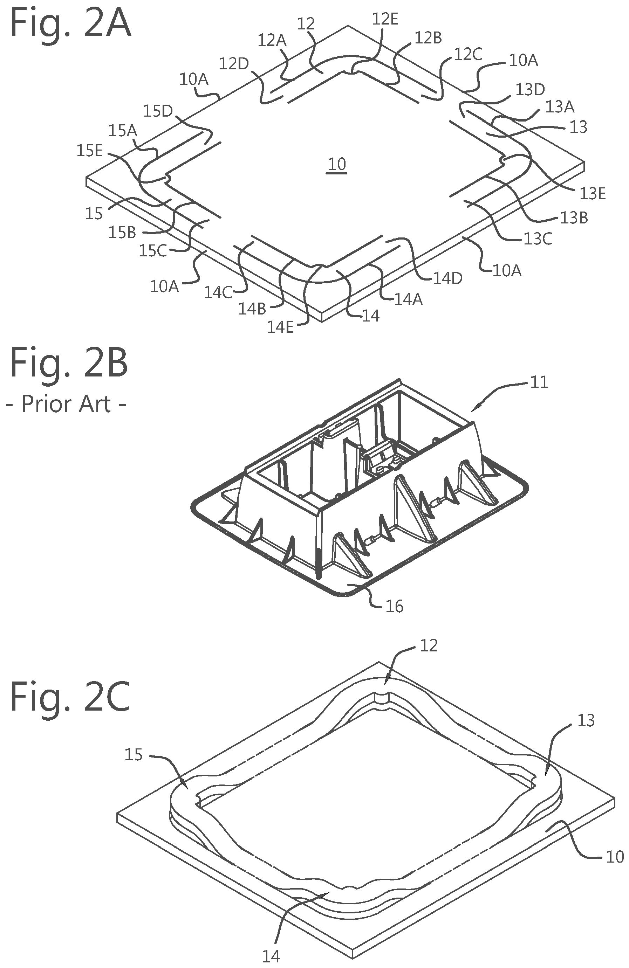

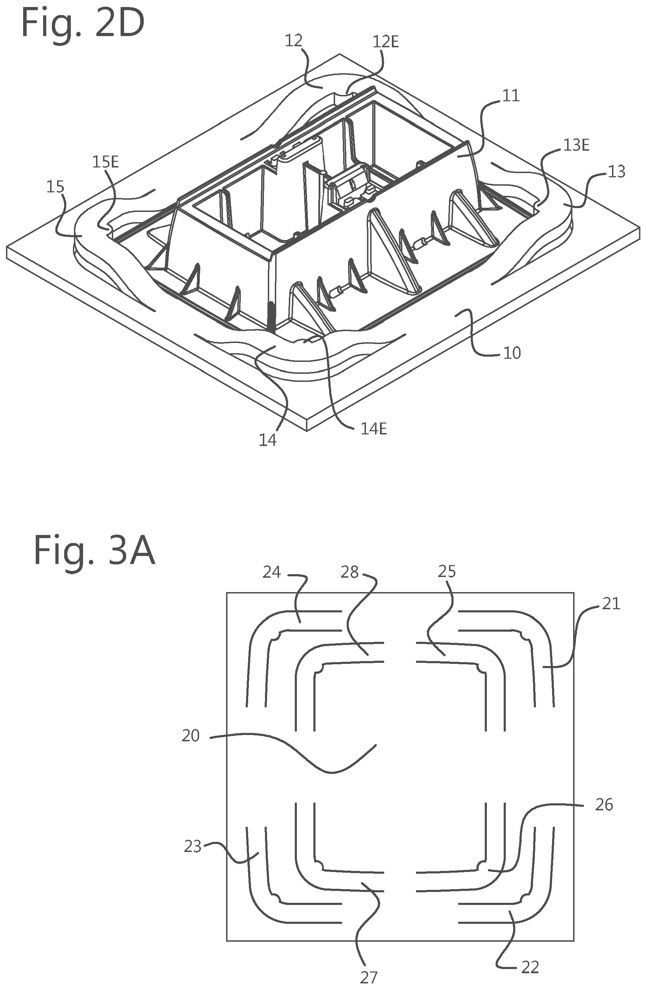

Figure 2 shows a second embodiment 10 of a device according to the invention, comprising a support 10, for supporting an underside such as a leg (11, shown in figure 2B) or support beam of a construction, in particular a support construction for solar panels, on a surface, in particular a flat roof, the support 10 comprising a flat, flexible support body 10, such as a plate with an arbitrary contour shape, provided with a number of attachment loops 12, 13, 14, 15 for a projection 16 provided on the underside of the construction, such as a hook or flange 16. Again, each of the attachment loops is formed by at least one cut 12A, 12B, 13A, 13B, 14A, 14B, 15A, 15B in the support body that does not touch the circumference of the support body 10A; and each thereby comprising a first and second connection point 12C, 12D, 13C, 13D, 14C, 14D, 15C, 15D with the rest of the support body located at a mutual distance, between which connection points the loop can be lifted out of the plane of the support body, in order to be hooked around the projection.

The cuts extend substantially parallel to each other and the cuts of multiple attachment loops extend parallel to each other. In this embodiment, the cuts and thus the loops extend substantially in an L-shape, and each of the legs of an L-shape lies parallel to a leg of another L-shape, wherein the L-shapes together enclose a rectangle or square., as visible in Figure 2C.

Figure 2D shows an assembled state. On a side of the loop facing away from the outside of the support body the loops comprises a projection 12C, 13C, 14C, 15C directed towards the inside of the support body.

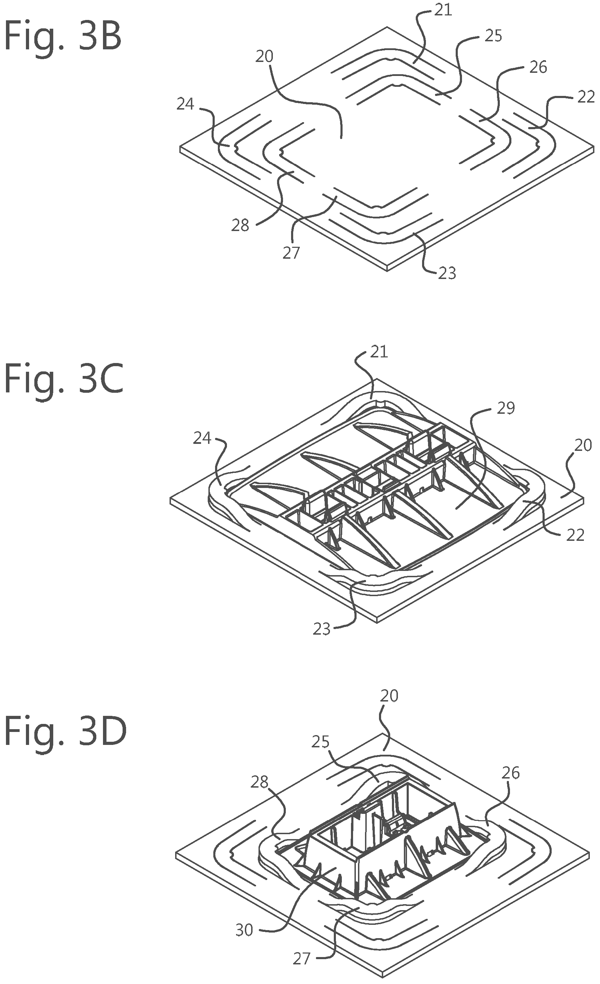

Figure 3 shows a third embodiment 20 of a device according to the invention. The device 20 comprises a first set of L-shaped loops 21, 22, 23, 24, and a second set of L-shaped loops 25, 26, 27, 28. The first set of L-shaped loops are arranged to enclose a first rectangular shape that matches a first support leg 29 of a construction as shown in figure 3C. The second set of L-shaped loops are arranged to enclose a second rectangular shape with a smaller size, matching a second support leg 30 of a construction as shown in figure 3D.

The embodiments shown are examples only and do in no sense limit the scope of protection as defined in the following claims.

## Claims

1. Support, for supporting an underside such as a leg or support beam of a construction, in particular a support construction for solar panels, on a surface, in particular a flat roof, the support comprising:
- A flat, flexible support body, such as a plate with an arbitrary contour shape, provided with:
- At least one and preferably a number of attachment loops for a projection provided on the underside of the construction, such as a hook or flange,
∘each of the attachment loops formed by at least one cut in the support body that does not touch the circumference of the support body; and
∘ each thereby comprising a first and second connection point with the rest of the support body located at a mutual distance, between which connection points the loop can be lifted out of the plane of the support body, in order to be hooked around the projection.

2. Support according to claim 1, wherein at least one attachment loop is formed by means of two cuts in the support body that do not touch the circumference of the support body, which cuts each extend from their own starting point to their own end point, wherein the loop is attached to the rest of the support body over a connecting line between the two starting points and over a connecting line over the two end points.

3. Support according to claim 2, wherein the cuts extend substantially parallel to each other.

4. Support according to claim 2, wherein the cuts of multiple attachment loops extend parallel to each other.

5. Support according to claim 2 or 3, wherein the cuts and thus the loops extend substantially in an L-shape.

6. Support according to claim 5, comprising 4 loops, wherein each of the legs of an L-shape lies parallel to a leg of another L-shape, wherein the L-shapes together enclose a rectangle or square.

7. Support according to one of the preceding claims, manufactured from a rubber or synthetic rubber, or from a laminate comprising a rubber or synthetic rubber.

8. Support according to one of the preceding claims, wherein at least one loop in particular on a side of the loop facing away from the outside of the support body comprises a projection in particular directed towards the inside of the support body.

9. Assembly of a support according to one of the preceding claims and a bottom side of a construction, such as a leg, provided with a flange, wherein the cuts of each of the loops located furthest from the outer edge of the support body are located together on a shape that corresponds to the circumferential shape of the flange on the leg.

10. Assembly according to claims 8 and 9, wherein the projection extends within the circumferential shape.
